# EUROPÄISCHE PATENTANMELDUNG

(11) **EP 3 115 166 A1**
(43) Veröffentlichungstag der Anmeldung: **11.01.2017**
(21) Anmeldenummer: 16172752.4
(22) Anmeldetag: 02.06.2016
(51) Int. Cl.: B29B 7/84, B29B 7/86, B29C 47/00, B29C 47/76, B29C 47/10

(54) **VERFAHREN ZUM VERARBEITEN EINES UNGETROCKNETEN, IN PARTIKELFORM VORLIEGENDEN POLYMERS ODER POLYMERGEMISCHS MITTELS EINES EIN- ODER MEHRWELLIGEN EXTRUDERS, UND EXTRUDER HIERFÜR**

(30) Priorität: 07.07.2015 DE 102015110983
(71) Anmelder: Leistritz Extrusionstechnik GmbH, 90459 Nürnberg (DE)
(72) Erfinder: RATH Dr., Dieter, 91126 Schwabach (DE)
(74) Vertreter: Lindner Blaumeier Patent- und Rechtsanwälte

(57) **Zusammenfassung**

Verfahren zum Verarbeiten eines ungetrockneten, in Partikelform vorliegenden Polymers oder Polymergemischs mittels eines ein- oder mehrwelligen Extruders umfassend einen Arbeitszylinder (2) mit einer oder mehreren darin aufgenommenen Schneckenwellen (4), einen am Arbeitszylinder vorgesehenen Zuführabschnitt (7) für das Polymer und einen am Arbeitszylinder vorgesehenen Aufschmelzbereich (13), in dem das Polymer oder Polymergemisch aufschmilzt, wobei das ungetrocknet über den Zuführabschnitt in den Arbeitszylinder eingebrachte Polymer oder Polymergemisch in wenigstens einem am Arbeitszylinder dem Zuführabschnitt nachgeschalteten und dem Aufschmelzbereich vorgeschalteten Vakuumentgasungsbereich (18) mit einer zugeordneten Vakuumerzeugungseinrichtung (19) entgast wird. Des weiteren wird ein Extruder zur Durchführung des Verfahrens offenbart.

## Beschreibung

Die Erfindung betrifft ein Verfahren zum Verarbeiten eines ungetrockneten, in Partikelform vorliegenden Polymers oder Polymergemischs mittels eines ein- oder mehrwelligen Extruders umfassend einen Arbeitszylinder mit einer oder mehreren darin aufgenommenen Schneckenwellen, einen am Arbeitszylinder vorgesehenen Zuführabschnitt für das Polymer und einen am Arbeitszylinder vorgesehenen Aufschmelzbereich, in dem das Polymer aufschmilzt.

In Form von Partikeln vorliegende Polymere oder Polymergemische werden mittels Extrudern in der Regel zu Granulaten, Folien oder anderen Zwischen- oder Endprodukten verarbeitet. Im Folgenden wird lediglich von "Polymer" gesprochen, wobei dieser Begriff nicht nur eine Polymersorte, sondern auch Polymergemische umfasst. Zur Verarbeitung wird das Polymer, das als loses Schüttgut vorliegt, mittels eines ein- oder mehrwellligen Extruders umfassend einen Arbeitszylinder mit einer oder mehreren darin aufgenommenen Schneckenwellen verarbeitet respektive aufbereitet, um es in einem dem Extruder unmittelbar nachgeschalteten Formgebungsprozess in die gewünschte Zwischen- oder Endproduktform zu bringen. Das Polymer wird über einen Zuführabschnitt des Arbeitszylinders in den Zylinder eingeführt und über die eine oder die mehreren darin rotierenden Schneckenwellen transportiert. Es gelangt in einen Aufschmelzbereich, in dem es aufschmilzt, so dass sich eine homogene Schmelzmasse ausbildet, die bis zum Ende des Arbeitszylinders transportiert wird, wo sie z. B. an ein der Produktformgebung dienendes Anbaugerät übergeben wird.

Mitunter werden Polymere verarbeitet, die aufgrund von Hygroskopie oder vorgeschalteten Waschprozessen Wasser enthalten. Einige Polymere neigen zu einem hydrolytischen Abbau beim Aufschmelzvorgang und während der Verarbeitung in der Schmelzphase, welcher in etwa proportional zur Menge des vorhandenen Wassers ist.

Dieser molekulare Abbau des Polymers verschlechtert die Produkteigenschaften. Bekannte hygroskopische Kunststoffe, die während der Verarbeitung zu einem hydrolytischen Abbau neigen können, sind z. B. Polyethylenterephthalat (PET), Polylactide (PLA), Polyamide (PA), Polycarbonate (PC) oder Polybutylenterephthalat (PBT), wobei diese Aufzählung nicht abschließend ist.

Um den molekularen Abbau zu vermeiden ist es bekannt, das Polymer vor dem Zuführen in den Arbeitszylinder über eine Trocknungsvorrichtung zu trocknen, das heißt, dass eine dem Zuführabschnitt vorgeschaltete externe Trocknungsvorrichtung zur Vortrocknung des Polymers verwendet wird. Eine solche Trocknungsvorrichtung ist ein großvolumiges und insbesondere teures Gerät mit hohem Energieverbrauch. Darüber hinaus ist im Rahmen der Verarbeitung ein separater Vorbehandlungsschritt, nämlich die Vortrocknung, erforderlich.

Der Erfindung liegt damit das Problem zugrunde, ein Verfahren anzugeben, das die Verarbeitung eines ungetrockneten, in Partikelform vorliegenden Polymers ermöglicht, ohne dass im Rahmen der Verarbeitung mittels des Extruders ein nennenswerter hydrolytischer Abbau des Polymers erfolgt.

Zur Lösung dieses Problems ist bei einem Verfahren der eingangs genannten Art erfindungsgemäß vorgesehen, dass das ungetrocknet über den Zuführabschnitt in den Arbeitszylinder eingebrachte Polymer in wenigstens einem am Arbeitszylinder dem Zuführabschnitt nachgeschalteten und dem Aufschmelzbereich vorgeschalteten Vakuumentgasungsbereich entgast wird.

Das erfindungsgemäße Verfahren lässt das Verarbeiten ungetrockneten Polymers zu, ohne dass die Gefahr eines unzulässig hohen hydrolytischen Abbaus gegeben ist. Denn erfindungsgemäß wird das ungetrocknet in den Arbeitszylinder eingebrachte Polymer in einem dem Zuführabschnitt nachgeschalteten und dem Aufschmelzabschnitt vorgeschalteten Vakuumentgasungsbereich entgast. Über diese Vakuumentgasung erfolgt eine Trocknung des Polymers, das heißt, dass vorhandene Restfeuchte zu einem beachtlichen Teil, bevorzugt zu nahezu 100 %, entzogen wird. Dies gelingt durch Anlegen eines Vakuums, wobei hierunter grundsätzlich ein niedrigerer Druck im Vergleich zum atmosphärischen Druck zu verstehen ist. Bevorzugt beträgt der im Vakuumentgasungsbereich respektive über eine entsprechende Vakuumerzeugungseinrichtung erzeugte Druck wenigstens 500 mbar, bevorzugt auch weniger. Er sollte sich im Intervall zwischen 500 mbar - 5 mbar bewegen, wobei aber auch niedrigere Drucke, beispielsweise bis 0,1 mbar, ebenfalls angelegt werden können.

Das im Entgasungsbereich entgaste, also getrocknete Polymer wird sodann in den Aufschmelzbereich gefördert, wo es wie ausgeführt aufschmilzt, ohne sich jedoch in nennenswertem Maße hydrolytisch zu zersetzen, das heißt, dass ein weitgehend reduzierter bis nahezu vollständig unterbundener Polymerabbau gegeben ist.

Das Polymer wird bevorzugt über eine Schleuse in den Zuführabschnitt eingebracht. Diese Schleuse ist derart ausgelegt, dass sie das Erzeugen und Aufrechterhalten des Vakuums im Entgasungsbereich ermöglicht, das heißt, dass sie insoweit hinreichend vakuumfest ist, dass der gewünschte Unterdruck aufgebaut werden kann. Bevorzugt wird hierzu eine Zellradschleuse oder werden mehrere hintereinander geschaltete Zellradschleusen verwendet. Eine solche Zellradschleuse weist ein in einem ringförmigen Raum drehgelagertes Flügelrad auf, auf das üblicherweise von oben das Polymer aufgegeben wird. Die Radflügel laufen mit einem sehr geringen Abstand relativ zur Ringraumwand, so dass sich hierüber und über das aufgegebene Polymer eine weitgehende Abdichtung ermöglicht. An einem unterseitigen Auslauf gelangt das Polymer sodann in den Zuführbereich des Extruders.

Gemäß einer vorteilhaften Weiterbildung kann ein Eintrag von den Arbeitszylinder bis zum Vakuumentgasungsbereich durchströmender Luft erfolgen. Das heißt, dass ein geringer Luftzug realisiert wird, der für ein Herausfördern der vorhandenen Restfeuchte vorteilhaft ist. Die durchströmende Luft dient quasi als Transportmedium, das die nur leicht gebundenen Wassermoleküle mitnimmt und über den Vakuumentgasungsbereich aus dem Zylinder fördert. Da die zugeführte Luft ebenfalls über den Vakuumentgasungsbereich abgezogen wird, ist hierdurch ein Feuchtigkeitseintrag in das zu prozessierende Polymer ausgeschlossen.

Dieser definierte Luftstrom kann gemäß einer ersten Erfindungsausgestaltung über die Schleuse, also beispielsweise die Zellradschleuse, in den Arbeitszylinder erfolgen. Wie bereits beschrieben kann über eine solche Schleuse respektive Zellradschleuse eine die Erzeugung des relativ geringen Vakuums ermöglichende Dichtheit erreicht werden, gleichwohl wird hierüber natürlich keine vollständige Abdichtung erzielt. Das heißt, dass über die Schleuse, gegebenenfalls durch entsprechende bauliche Anpassung, eine definierte Luftzufuhr möglich ist.

Alternativ zur Luftzufuhr über die Schleuse ist es möglich, am Arbeitszylinder eine separate Luftzuführeinrichtung vorzusehen, also eine Art Zuführdüse, die beispielsweise unterdruckgesteuert über ein Ventil geöffnet wird, oder der ein entsprechendes Schaltventil, das über eine Steuerungseinrichtung angesteuert wird, zugeordnet sein kann. Auch hierüber kann ein geringer Luftzustrom sichergestellt werden.

Eine dritte Erfindungsalternative sieht vor, die Luft über den Einlaufbereich der einen oder der mehreren Schneckenwellen in den Arbeitszylinder zuströmen zu lassen. Die eine oder die mehreren Schnecken sind im Einlaufbereich in den Arbeitszylinder über entsprechende Dichtelemente abgedichtet respektive gelagert. Dieser Abdichtbereich, der im Hinblick auf den geringen Unterdruck ebenfalls nicht vollständig gasdicht sein muss, kann nun so ausgelegt werden, dass über ihn ein entsprechend definierter Luftzustrom in den Arbeitszylinder möglich ist.

Insgesamt lässt das erfindungsgemäße Verfahren ein sicheres und insbesondere einen hydrolytischen Abbau reduzierendes Verarbeiten eines hygroskopischen Polymers zu, da über den Vakuumentgasungsbereich flüchtige Substanzen, die zu einem solchen Abbau führen würden, in der Regel natürlich Wasser, abgezogen werden können und es zu einer in-situ-Trocknung des Polymers im Arbeitszylinder unmittelbar vor dem eigentlichen Aufschmelzvorgang kommt. Je länger die Verweilzeit in dem Vakuumentgasungsbereich, desto höher ist der Trocknungsgrad.

Neben dem Verfahren selbst betrifft die Erfindung ferner einen Extruder, der insbesondere zur Durchführung des Verfahrens der beschriebenen Art dient, umfassend einen Arbeitszylinder mit einer oder mehreren darin aufgenommenen Schneckenwellen, einem am Arbeitszylinder vorgesehenen Zuführabschnitt für das Polymer und einem am Arbeitszylinder vorgesehenen Aufschmelzbereich, in dem das Polymer aufschmilzt. Dieser Extruder zeichnet sich dadurch aus, dass am Arbeitszylinder wenigstens ein dem Zuführabschnitt nachgeschalteter und dem Aufschmelzbereich vorgeschalteter Vakuumentgasungsbereich mit einer zugeordneten Vakuumerzeugungseinrichtung vorgesehen ist.

Der Extruder weist den erfindungsgemäß dem Zuführabschnitt nach- und dem Aufschmelzbereich vorgeschalteten Vakuumentgasungsbereich auf. Diesem ist eine entsprechende Vakuumerzeugungseinrichtung zugeordnet, umfassend eine Pumpe, die entweder direkt an den Arbeitszylinder angeflanscht sein kann, oder über eine entsprechende Leitung an einen entsprechenden Anschlussstutzen des Arbeitszylinders angeschlossen sein kann. Der Arbeitszylinder selbst besteht in an sich bekannter Weise aus mehreren in Reihe hintereinander angeordneten und miteinander verbundenen Zylindersegmenten, so dass zur Ausbildung des Vakuumentgasungsbereichs ein oder mehrere entsprechende Zylindersegmente mit einem entsprechenden Anschlussstutzen für die Pumpe oder den Entgasungsschlauch in die Zylindersegmentreihe integriert werden können.

Die Vakuumerzeugungseinrichtung ist derart ausgelegt, dass im Vakuumentgasungsbereich ein Druck kleiner als der Atmosphärendruck, insbesondere im Bereich von 500 - 0,1 mbar (absoluter Druck) erzeugbar ist, mithin also ein hinreichender Unterdruck im Vergleich zum atmosphärischen Druck.

Zur Zufuhr der zu verarbeiteten Polymerpartikel ist eine Dosiereinrichtung vorgesehen, über die das Polymer in definierter Menge zugeführt werden kann.

Zwischen dieser Dosiereinrichtung und dem Zuführabschnitt, der üblicherweise einen Aufgabetrichter umfasst, ist erfindungsgemäß eine die Erzeugung des Vakuums im Vakuumentgasungsbereich erlaubende Schleuse angeordnet, die so ausgelegt ist, dass sie im Hinblick auf den gewünschten, zu erzielenden Unterdruck hinreichend dicht ist. Bevorzugt wird hierzu eine Zellradschleuse verwendet, wobei aber auch andere Schleusentypen denkbar sind.

Die Schleuse kann dabei derart ausgelegt sein, dass über sie ein definierter Zustrom an Luft, die den Arbeitszylinder bis zum Vakuumentgasungsbereich durchströmt, möglich ist. Das heißt, dass beim Eintrag des Polymers in den Arbeitszylinder eine gewisse Luftmenge mit eingetragen wird, die über das Vakuumsystem wieder ausgetragen wird. Es stellt sich also ein entsprechender Luftstrom ein, der das Abdampfen der auszutragenden flüchtigen Substanzen, die für den hydrolytischen Abbau verantwortlich wären, in der Regel natürlich Wasser, begünstigt.

Anstelle eines geringen Luftzustroms über die Schleuse ist es auch denkbar, am Arbeitszylinder eine Zuführeinrichtung für die den Arbeitszylinder bis zum Entgasungsbereich durchströmende Luft vorzusehen, beispielsweise in Form einer Düse mit zugeordnetem Ventil, das mit Erreichen eines entsprechenden Unterdrucks öffnet, oder mit einem zugeordneten, über eine Steuerungseinrichtung ansteuerbaren Schaltventil oder dergleichen.

Schließlich ist es denkbar, die Luftzufuhr über ein oder mehrere Dichtelemente, über die die eine oder die mehreren Schneckenwellen im Einlaufbereich in den Arbeitszylinder zum dortigen Zylindersegment hin abgedichtet sind, zu ermöglichen. Im Hinblick auf den aufzubauenden Unterdruck ist eine entsprechende Abdichtung der ein oder der mehreren Schneckenwellen zum Arbeitszylinder hin erforderlich. Diese Abdichtung soll, wenn hierüber kein Luftzustrom erfolgen soll, hinreichend dicht sein, sie muss jedoch nicht vollkommen gasdicht sein. Es ist nun aber möglich, diese Dichtebene so auszulegen, dass über sie ein hinreichender Zustrom an Luft in den Arbeitszylinder möglich ist.

Da erfindungsgemäß sowohl eine Schleuse vorgesehen ist als auch natürlich entsprechende Dichtelemente im Einlaufbereich der einen oder der mehreren Schneckenwellen vorgesehen sein sollten, ist es denkbar, über beide Kanäle einen Luftzustrom zu ermöglichen, so dass sich ein hinreichender Gesamtluftstrom ergibt.

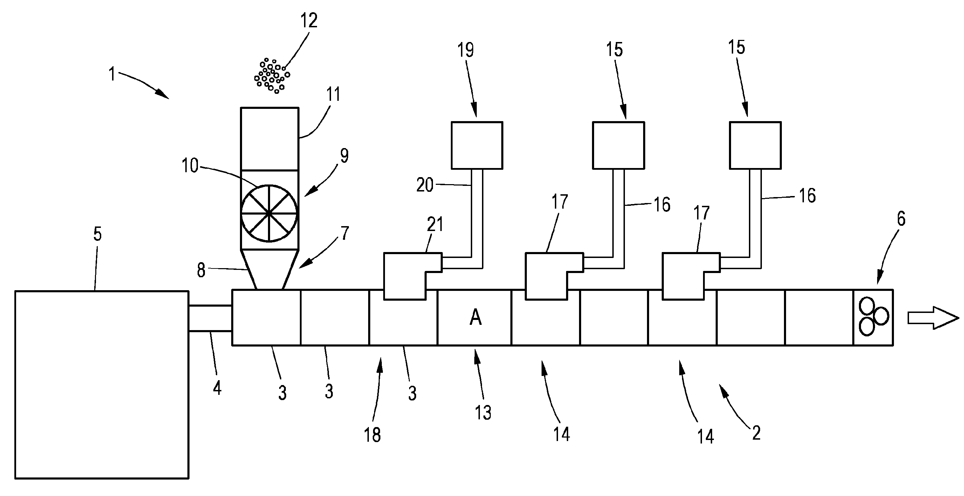

Weitere Vorteile und Einzelheiten der Erfindung ergeben sich aus dem im Folgenden beschriebenen Ausführungsbeispiel sowie anhand der Zeichnung.

Die Figur zeigt einen erfindungsgemäßen Extruder 1, der zur Durchführung des erfindungsgemäßen Verfahrens geeignet ist. Der Extruder umfasst einen Arbeitszylinder 2 bestehend aus einer Reihe separater, hintereinander angeordneter Zylindersegmente 3. In dem Arbeitszylinder 2 ist eine oder sind mehrere Schneckenwellen 4 aufgenommen, die mit einer Antriebseinrichtung 5 gekoppelt sind. Die eine oder die mehreren Schneckenwellen 5 rotieren im Arbeitszylinder 2 und transportieren auf diese Weise ein aufgegebenes, aufzuschmelzendes respektive zu verarbeitendes Polymer bis zu einem Austrag 6 am Ende des Arbeitszylinders 2, an den sich gegebenenfalls eine weitere Einrichtung anschließt, in der das aufgeschmolzene Polymer zur Bildung eines Zwischenproduktes weiterprozessiert wird, wie durch den Pfeil am rechten Ende des Arbeitszylinders 2 dargestellt ist.

Der Arbeitszylinder 2 weist einen Zuführabschnitt 7 auf, der vom in der Figur links gezeigten ersten Zylindersegment gebildet wird. Der Zuführabschnitt 7 umfasst einen Zuführtrichter 8. An diesem angeordnet respektive diesem vorgeschaltet ist eine Schleuse 9, bei der es sich im gezeigten Beispiel um eine (gegebenenfalls auch mehrere hintereinander geschaltete) Zellradschleuse 10 handelt. Der Zellradschleuse 10 wiederum vorgeschaltet ist eine Dosiereinrichtung 11, der das zu verarbeitende, in Partikelform vorliegende Polymer 12 zugeführt wird und über welche Dosiereinrichtung 11 es mengenmäßig exakt dosiert zur Schleuse 9 zugeführt wird.

Der Arbeitszylinder 2 weist ferner einen Aufschmelzbereich 13 (mit "A" gekennzeichnet) auf, der im gezeigten Beispiel über ein Zylindersegment 3 gebildet ist. Er kann aber auch über zwei oder mehr hintereinander angeordnete Zylindersegmente 3 gebildet sein, je nachdem, wie lang er sein soll. Das Polymer schmilzt vor allem durch Knetung durch die Schneckenwellen auf, das heißt durch dissipierte Antriebsleistung. Das oder die jeweiligen Zylindersegmente kann ferner beheizbar sein, so dass auch über das oder die Zylindersegmente ein entsprechender Wärmeenergieeintrag in das Polymer möglich ist, dass es in diesem Aufschmelzbereich 13 aufschmilzt.

Das aufgeschmolzene Polymer wird sodann über die eine oder die mehreren Schneckenwellen 4 weitertransportiert. Dem Aufschmelzbereich 13 nachgeschaltet sind zwei Vakuumentgasungsbereiche 14, jeweils gebildet durch ein entsprechendes Zylindersegment 3, denen entsprechende Vakuumerzeugungseinrichtungen 15 zugeordnet sind, üblicherweise entsprechende Pumpen, die im gezeigten Beispiel über entsprechende Schlauchverbindungen 16 an entsprechenden Verbindungsflanschen 17 der Zylindersegmente 3 angeschlossen sind. Über diese Vakuumentgasungsbereiche 14 ist eine Vakuumentgasung, also eine Abfuhr von sich durch das Aufschmelzen des Polymers 12 bildenden flüchtigen Bestandteilen und von vorhandener Restfeuchte aus dem Arbeitszylinder 2 möglich, so dass das am Ende des Arbeitszylinders austretende Polymer weitestgehend bzw. nahezu vollständig entgast ist.

Erfindungsgemäß ist zwischen dem Zuführabschnitt 7 und dem Aufschmelzbereich 13 ein Vakuumentgasungsbereich 18 vorgesehen, dieser ist also dem Zuführbereich 7 nach- und dem Aufschmelzbereich 13 vorgeschaltet. Er befindet sich bevorzugt unmittelbar vor dem Aufschmelzbereich 13, also vor dem einen oder dem ersten Zylindersegment, das zum Aufschmelzen entsprechend temperiert wird. Der Vakuumentgasungsbereich 18 wird über ein Zylindersegment 3 oder mehrere Zylinderelemente 3 gebildet, das mit einer entsprechenden Vakuumerzeugungseinrichtung 19, wiederum in Form oder umfassend eine entsprechende Pumpe, über eine entsprechende Schlauch- oder Rohrleitung 20, die an einem Verbindungsflansch 21 des Zylindersegments 3 angeschlossen ist, verbunden ist. Über die Vakuumerzeugungseinrichtung ist ein Druck im Bereich von bevorzugt 500 - 5 mbar erzeugbar, das heißt, dass ein entsprechender Unterdruck im Vergleich zum atmosphärischen Druck in dem Vakuumentgasungsbereich 18 erzeugt wird, insbesondere natürlich in Richtung des Zuführabschnitts 7, nachdem in die andere Richtung, also zum Aufschmelzbereich 13 hin, das aufgeschmolzene Polymer den Arbeitszylinder abdichtet.

Über diese Vakuumentgasung bzw. den Vakuumentgasungsbereich 18 ist es möglich, abdampfende Substanzen respektive insbesondere Wasser, also Restfeuchte, in hohem Umfangaus dem Arbeitszylinder zu bringen, mithin also das ungetrocknet aufgegebene Polymer 12 während des eigentlichen Verarbeitungsprozesses vor dem Aufschmelzen zu trocknen. Hierüber ist also eine in-situ-Trocknung des ungetrocknet zugeführten Polymers 12 möglich. Durch den Entzug der abdampfenden Substanzen respektive der Restfeuchte wird ein hydrolytischer Abbau des Polymers, der ansonsten im Aufschmelzbereich 13 stattfinden kann, reduziert respektive findet nur noch in einem vernachlässigbaren Maß statt, das keinerlei Auswirkung auf die Qualität des herzustellenden Zwischenproduktes hat.

Um den gewünschten Unterdruck im Vakuumentgasungsbereich 18 respektive im Arbeitszylinderabschnitt zwischen dem Zuführabschnitt 7 respektive der Schleuse 9 und dem Aufschmelzbereich 13 erzeugen zu können, ist eine entsprechende Abdichtung der einen oder der mehreren Schneckenwellen 4 im Einlaufbereich in den Arbeitszylinder 2 erforderlich, was über entsprechende Dichtelemente erfolgt, die die Schneckenwelle(n) zum Zylindersegment hin abdichten. Eine vollkommene Gasundurchlässigkeit ist hier nicht erforderlich, nachdem nur ein relativ geringer Unterdruck zu erzeugen ist. Auch die Schleuse 9 respektive Zellradschleuse 10 sollte hinreichend vakuumdicht sein, damit der gewünschte Unterdruck erzeugt werden kann.

Gleichwohl ist es von Vorteil, wenn entweder über die Schleuse 9 oder über die Wellenabdichtung, gegebenenfalls auch über beide, ein geringer Luftstrom in den Arbeitszylinder 2 gegeben ist. Diese zuströmende Luft dient quasi als Transportmedium, um die abdampfenden Substanzen, also primär Wasser, längs des Arbeitszylinders mitzunehmen und zum Vakuumentgasungsbereich 18 zu transportieren, wo die zuströmende Luft zusammen mit den transportierten flüchtigen Substanzen ausgetragen wird. Der Luftstrom respektive die Auslegung der Schleuse 9 bzw. der Wellenabdichtung sollte derart sein, dass der Luftstrom die Unterdruckerzeugung nicht beeinträchtigt, das heißt, dass das zu erreichende Unterdruckniveau ohne weiteres erzeugt werden kann, und dass der Luftstrom keine zu hohe Strömungsgeschwindigkeit aufweist, damit vermieden wird, dass aufgegebenes Polymer, insbesondere wenn dieses eine sehr geringe Schüttdichte aufweist, nicht vom Luftstrom mitgerissen und am Vakuumentgasungsbereich ausgetragen wird. Da der Austritt einzelner Polymerpartikel über den Vakuumentgasungsbereich aufgrund des anliegenden Vakuums nicht vollständig ausgeschlossen werden kann, ist es zweckmäßig, wenn eine Vakuumerzeugungseinrichtung 19 mit zugeordnetem Feststoffabscheider, der beispielsweise in dem Verbindungsschlauch 20 angeordnet sein kann, verwendet wird.

## Patentansprüche

1. Verfahren zum Verarbeiten eines ungetrockneten, in Partikelform vorliegenden Polymers oder Polymergemischs mittels eines ein- oder mehrwelligen Extruders umfassend einen Arbeitszylinder mit einer oder mehreren darin aufgenommenen Schneckenwellen, einen am Arbeitszylinder vorgesehenen Zuführabschnitt für das Polymer und einen am Arbeitszylinder vorgesehenen Aufschmelzbereich, in dem das Polymer oder Polymergemisch aufschmilzt, **dadurch gekennzeichnet, dass** das ungetrocknet über den Zuführabschnitt in den Arbeitszylinder eingebrachte Polymer oder Polymergemisch in wenigstens einem am Arbeitszylinder dem Zuführabschnitt nachgeschalteten und dem Aufschmelzbereich vorgeschalteten Vakuumentgasungsbereich entgast wird.

2. Verfahren nach Anspruch 1, **dadurch gekennzeichnet, dass** in dem Vakuumentgasungsbereich ein Druck im Bereich von 500 - 10⁻¹ mbar anliegt.

3. Verfahren nach Anspruch 1 oder 2, **dadurch gekennzeichnet, dass** das Polymer oder Polymergemisch über eine Schleuse in den Zuführabschnitt eingebracht wird.

4. Verfahren nach Anspruch 3, **dadurch gekennzeichnet, dass** das Polymer oder Polymergemisch über eine oder mehrere Zellradschleusen eingebracht wird.

5. Verfahren nach einem der vorangehenden Ansprüche, **dadurch gekennzeichnet, dass** ein Eintrag von den Arbeitszylinder bis zum Vakuumentgasungsbereich durchströmender Luft erfolgt.

6. Verfahren nach Anspruch 5, **dadurch gekennzeichnet, dass** die Luft über die Schleuse, über eine am Arbeitszylinder vorgesehene Zuführeinrichtung oder über den Einlaufbereich der einen oder der mehreren Schneckenwellen in den Arbeitszylinder zuströmt.

7. Extruder, insbesondere zur Durchführung des Verfahrens nach einem der vorangehenden Ansprüche, umfassend einen Arbeitszylinder (2) mit einer oder mehreren darin aufgenommenen Schneckenwellen (4), einen am Arbeitszylinder (2) vorgesehenen Zuführabschnitt (7) für das in Partikelform vorliegende Polymer (12) oder Polymergemisch und einen am Arbeitszylinder (2) vorgesehenen Aufschmelzbereich (13), in dem das Polymer (12) oder Polymergemisch aufschmilzt, **dadurch gekennzeichnet, dass** am Arbeitszylinder (2) wenigstens ein dem Zuführabschnitt (7) nachgeschalteter und dem Aufschmelzbereich (13) vorgeschalteter Vakuumentgasungsbereich (18) mit einer zugeordneten Vakuumerzeugungseinrichtung (19) vorgesehen ist.

8. Extruder nach Anspruch 7, **dadurch gekennzeichnet, dass** über die Vakuumerzeugungseinrichtung (19) in dem Vakuumentgasungsbereich (18) ein Druck im Bereich von 500 - 0,1 mbar erzeugbar ist.

9. Extruder nach Anspruch 7 oder 8, **dadurch gekennzeichnet, dass** zwischen einer das zu verarbeitende Polymer (12) zuführenden Dosiereinrichtung (11) und dem Zuführabschnitt (7) eine die Erzeugung des Vakuums im Vakuumentgasungsbereich (13) erlaubende Schleuse (9) angeordnet ist.

10. Extruder nach Anspruch 9, **dadurch gekennzeichnet, dass** die Schleuse (9) eine oder eine Kombination mehrerer Zellradschleusen (10) ist.

11. Extruder nach Anspruch 9 oder 10, **dadurch gekennzeichnet, dass** die Schleuse (9) derart ausgelegt ist, dass über sie ein Zustrom an Luft, die den Arbeitszylinder (2) bis zum Vakuumentgasungsbereich (13) durchströmt, erfolgt.

12. Extruder nach einem der Anspruche 7 bis 10, **dadurch gekennzeichnet, dass** am Arbeitszylinder (2) eine Zuführeinrichtung für Luft, über die ein Zustrom an Luft, die den Arbeitszylinder (2) bis zum Vakuumentgasungsbereich (13) durchströmt, erfolgt, vorgesehen ist

13. Extruder nach einem der Ansprüche 7 bis 12, **dadurch gekennzeichnet, dass** die eine oder die mehreren Schneckenwellen (4) im Einlaufbereich in den Arbeitszylinder (2) über ein oder mehrere Dichtelemente abgedichtet sind.

14. Extruder nach Anspruch 13, **dadurch gekennzeichnet, dass** das oder die Dichtelemente derart ausgeführt sind, dass ein Zustrom an Luft, die den Arbeitszylinder (2) bis zum Vakuumentgasungsbereich (13) durchströmt, erfolgt.
